# EUROPEAN PATENT SPECIFICATION

(11) **EP 4 655 497 B1**
(45) Date of publication and mention of the grant of the patent: **22.04.2026**
(21) Application number: 24729384.8
(22) Date of filing: 09.05.2024
(51) Int. Cl.: F03B 13/18, F03B 13/20

(54) **MULTIPURPOSE WAVE ENERGY CONVERTER**
MEHRZWECK-WELLENENERGIEWANDLER
CONVERTISSEUR D'ÉNERGIE HOULOMOTRICE POLYVALENT

(30) Priority: 17.04.2024 ME P202457
(43) Date of publication of application: 03.12.2025
(73) Proprietor: VULJAJ, Sokolj, 81206 Tuzi (ME)
(72) Inventor: VULJAJ, Sokolj, 81206 Tuzi (ME)
(74) Representative: Vossius & Partner Patentanwälte Rechtsanwälte mbB
(86) International application number: PCT/IB2024/054539
(87) International publication number: WO 2025/219751

(56) References cited:
- DE-A1- 102012 005 137
- KR-B1- 102 230 931
- US-A- 4 389 843
- US-B2- 9 243 606

## Description

### FIELD OF THE INVENTION

In a broader sense, the invention belongs to the field of energy, and specifically refers to a wave energy Converter. (IPC F03B13/14)

### BACKGROUND OF THE INVENTION

In the current state of the art, there are numerous proposals and designs for the use of wave power. It is possible to classify existing Systems into several groups such as pneumatic, hydraulic/piston, mechanical and linear magnetic. All of these wave energy Systems face various problems, such as very high production, maintenance and repair costs, expenses preventing corrosion and preventing oil leakage from the System into seawater, and providing a Converter from seismic ocean waves of high kinetic energy. All these conditions made the process of developing this type of technology for the production of ecological electricity with waves difficult compared to windmills and solar panels. It is known that the previous Converters with floats reduce the energy during the conversion and do not transfer all the energy of lifting the floats from the waves into rotational energy.
- WO2006108421Al, shows a wave power apparatus that includes a plurality of rotationally supported arms, each of which carries a float at its free end, so that a translational movement of the float caused by a wave, results in rotation of the arm. The apparatus comprises power conversion means for Converting power transmitted from the wave to the arms into electric power, e.g. a hydraulic System.
- WO2011062576A1, shows (WEC) that includes a float tending to move in phase with the waves, a spar tending to move out of phase with the float and power take off device (PTO) coupled between the float and spar for Converting their relative motion into useful energy. The PTO includes a rack and pinion mechanism which drives a high-torque, multi-pole, permanent magnet generator (PMG) to produce electrical signals of relatively high frequency relative to the frequency of the waves and the basic motion of the rack and pinion mechanism.
- US11920551B2, shows absorber type wave energy conversion device that includes a Power Take Off (PTO) which uses a torsion spring to return a vertical shaft to its original position after being rotated by a rope or cord that pulls a reel via a guide System. This spring return allows the PTO and housing to stay stationary under the wave energy while a buoy at the surface provides an oscillating linear movement.

US 4 389 843 A relates to a water wave energy transducer which comprises a boat having pivoted arms projecting out over the water, a float being mounted on the outboard end of each arm so that the arms are oscillated by wave action on the floats. Drive sprockets fixed on the arms coaxially with their pivots are connected by drive chains with two driven sprockets coaxial, respectively, with two gears which mesh with one another and one of which meshes with an output gear. The driven
sprockets are coupled with the coaxial gears by one-way clutches which are oppositely arranged so that one drives when the sprockets turn in one direction and the other drives when the sprockets turn in the opposite direction. Hence, the output gear is driven in the same direction by both upward and downward movement of the floats. The output gear is connected by a speed increasing gear train with an electric generator which can supply current to a motor for propelling the boat, or through a cable to the shore when the boat is anchored.

US 9 243 606 B2 relates to a device for converting wave-motion power which has a float, which, in use, is vertically movable in response to the wave-motion. The motion is transmitted to an input shaft which rotates with reciprocating rotary motion and is connected to an output shaft by way of a transmission unit. The transmission unit transfers torque from the input shaft to the output shaft along two torque paths and has two freewheels that are arranged respectively along the two paths and are configured so as to make the rotation of the output shaft unidirectional, independently of the rotation direction of the input shaft.

### DESCRIPTION OF THE INVENTION

The new multipurpose wave energy converter is an important technological advance, as it enables the transfer of sea and ocean wave energy into stable rotational energy with minimal energy losses.

An advantage of the invention is that the invention contains a mechanical interface with an accumulative spring that can be produced with a competitive price and high quality for long-term use.

The new converter is provided with multiple protections during surges.

The accumulator spring of the invention is a torsion or spiral spring mounted in a mechanical interface, in such a way that it rotates constantly in one direction only and serves as a rotary accumulator to convert stepped rotations into uniform rotations without energy loss.

The essence of this invention is a multipurpose converter of wave energy to stable rotational energy with simple mechanical components which is proposed by this application in 3 different models.
1. A stationary wave energy converter (60) into electrical energy, designed to be mounted on fixed surfaces on ocean shores.
2. Floating converter of wave energy (70 and 70') into electrical energy, constructed in the form of a floating power plant anchored near or far from the coast, and
3. Propulsion converter of wave energy (80) into rotational energy that can be used to propel cargo or recreational vessels that do not move at high speed.

### BRIEF DESCRIPTION OF THE DRAWINGS

To complete the description of the invention and to contribute to a better understanding of the features of the invention, a set of illustrative and non-limiting drawings is attached to the described specification.
Figure 1 shows, inside section, a stationary converter (60) and a mechanism for converting wave energy to electrical energy, intended to be installed on fixed surfaces with one or more floats on the surface of the water.
[Fig.2] shows in detail the mechanism of the stationary converter (60) in cross-section.
[Fig.3] shows a top view of the converter mechanism, which uses gears to transmit torque.
[Fig.4] shows from above a floating power plant (70) with multiple floats and mechanisms arranged in two secondary shafts that are connected by a gear (42) that changes the direction of rotation of one shaft to accommodate the other shaft, connected in one accumulative shaft (38) and a generator (6).
[Fig.5] shows a side section of the floating power plant (70) showing the interior of the tank (62), the lateral movable partitions (69), the liquid (20) and the internal waves (63) which serve to increase the swaying of the floating power plant, and which are indicated by an arrow and number (35).
[Fig.6]. Shows a frontal cross-section of the floating power plant (70) where the longitudinal watertight fixed partitions (79) and liquid (20) can be seen during rocking of the power plant.
[Fig.7] shows an anchored saucer-shaped floating power plant (70') on the surface of ocean water (29).
[Fig.8] shows a cross-section of the mechanism, the disc-shaped power plant (70').
[Fig.9] shows the operation of the saucer-shaped floating power plant (70') during waves.
[Fig.10] shows two types of floating power plants (70 and 70') anchored to the bottom of the sea, on their bases (71) in a protective position during strategic waves (59).
[Fig.11] shows a vessel (80) that uses a wave energy converter as an environmental engine to propel the vessel.
[Fig.12] shows the vessel (80) from above, using converters to move the vessel and to store energy in batteries connected to an electric motor that turns on automatically when there are not enough waves, and when the speed of the converter system drops.

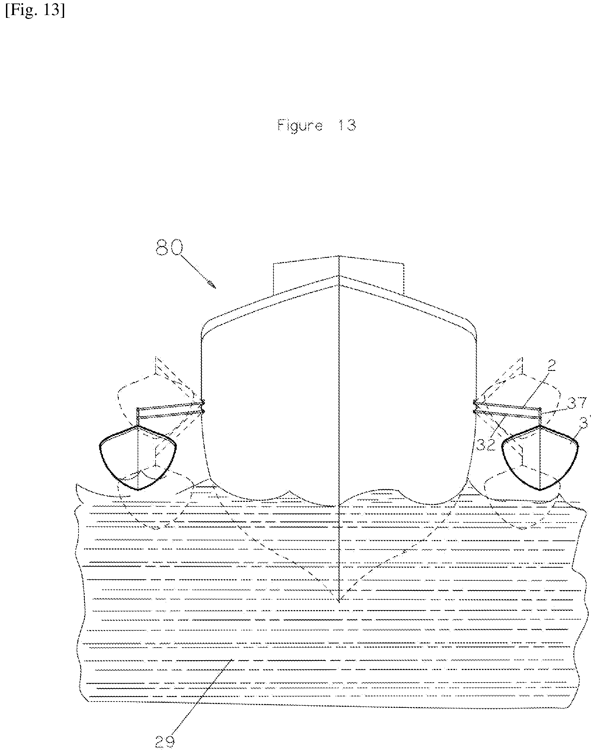

[Fig.13] shows a frontal section of the vessel (80), with wave energy converters.

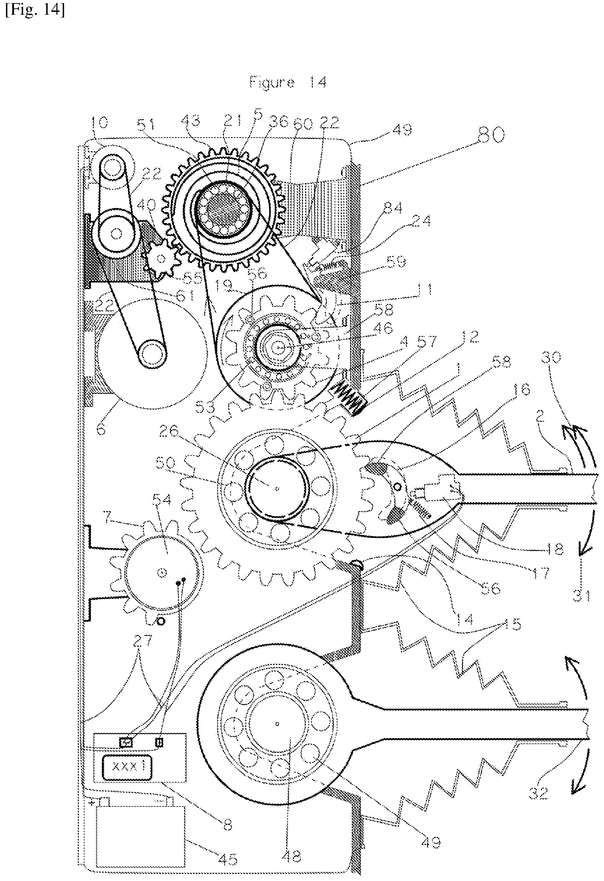

[Fig.14] shows a detailed cross-section of the converter mechanism for vessels.

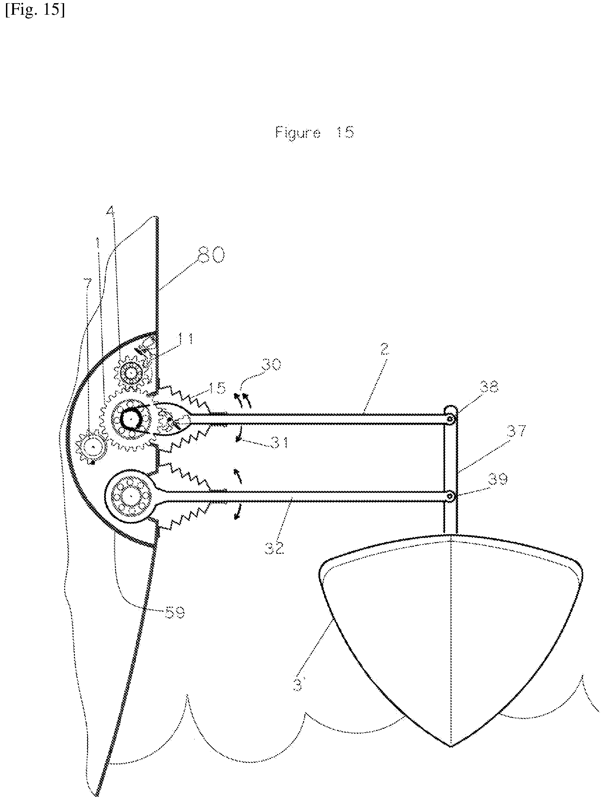

[Fig.15] shows a cross-section of the mechanism with the auxiliary support (32) and the vertical support (37), which serves to hold the aerodynamic float (3') horizontally.
[Fig.16] shows the position of the two-way switch (16) when it releases the arm (2) to move independently of the converter mechanism.
[Fig.17] shows the position of the two-way switch (16) when engaged by the lower tooth (56) on the primary gear (1) and the activation of the half gear (7) to raise the float (3) above the water surface when no converters are used.
[Fig.18] shows the vessel (80) with the aerodynamic floats (3') in the position when no converters are used.

### DETAILED DESCRIPTION OF THE INVENTION

Within the figures, the same components are designated by the same reference numbers. This new converter represents a set of mechanical devices that convert wave energy into stable rotational energy. The invention is intended to be used in the form of a stationary converter (60), a floating converter (70) and in the form of a converter for the propulsion of vessels (80) and for the supply of energy for all types of consumers operating in the rotary principle.

This new converter has a body (49), a float (3), an arm (2) having at the first end a primary shaft (26) mounted rotatably on the primary gear (1) and on bearings (50), so that the arm (2) moves only up and down with limited movement on the upper stop (12) and lower stop (14). The upper stop preferably has a compression spring (57) inside to dampen and prevent strong movements of the mentioned arm during larger waves.

The arm (2) is equipped with a two-way switch (16), which serves to block the said arm to the primary gear (1), to rotate together on the bearing (50), or to release them to rotate independently of each other on the same axis, picture 2 and 3. The arm (2) has a float (3) attached to the other end.

The two-way switch (16) contains an upper tooth (58) and a lower tooth (56) and is rotatably mounted on the shaft (66). The two-way switch (16) functions by means of a spring (17) and by means of an electric, magnetic or hydraulic dual-purpose (18) which is activated by electric switches (81), or automatically with an electronic controller (8) picture 2. The two-way switch (16) is tensioned by a spring (17) to lock with the upper tooth (58) on the primary gear (1) when raising the float, indicated by the double arrow (30), while lowering the float is indicated by the arrow (31). The float goes down with the waves relieved by the two-way switch jumping by sliding over the teeth of the gear (1).

The primary gear (1) is rotatably mounted on the bearing (25) and connected to the secondary input gear (4) which is fixed in the secondary shaft (46), whereby the secondary shaft is rotatably mounted on the bearings (53).

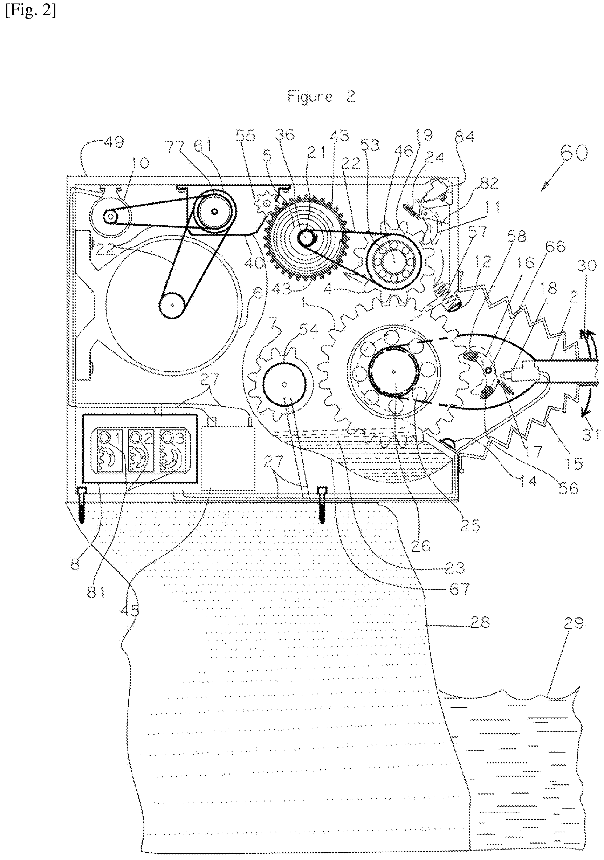

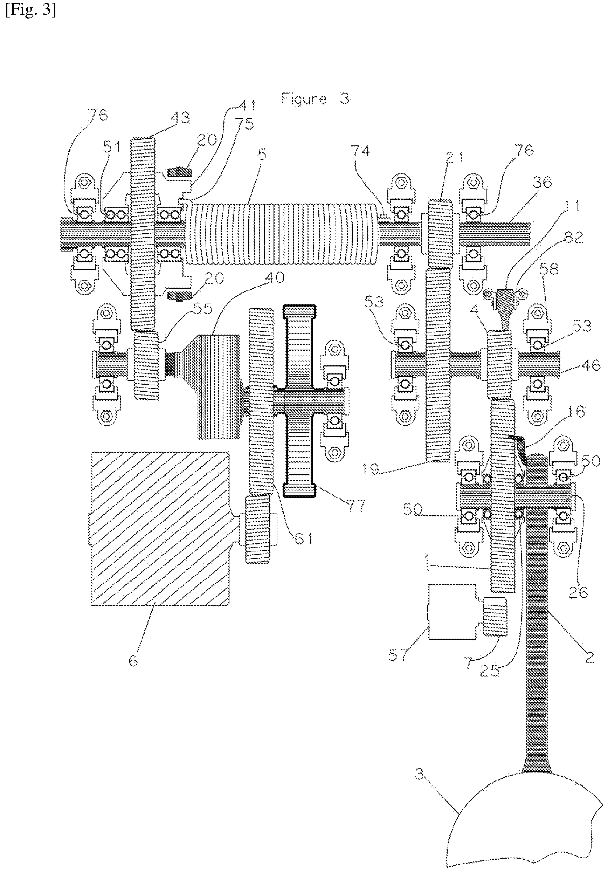

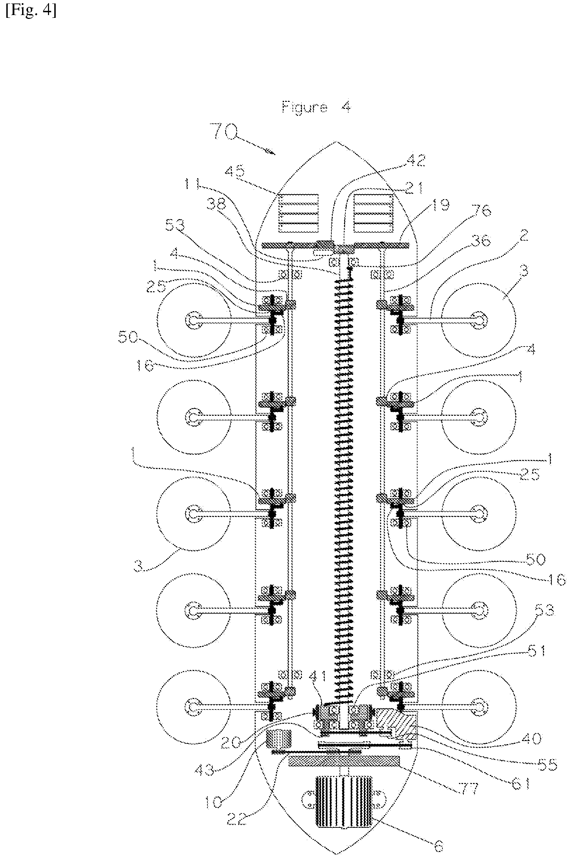

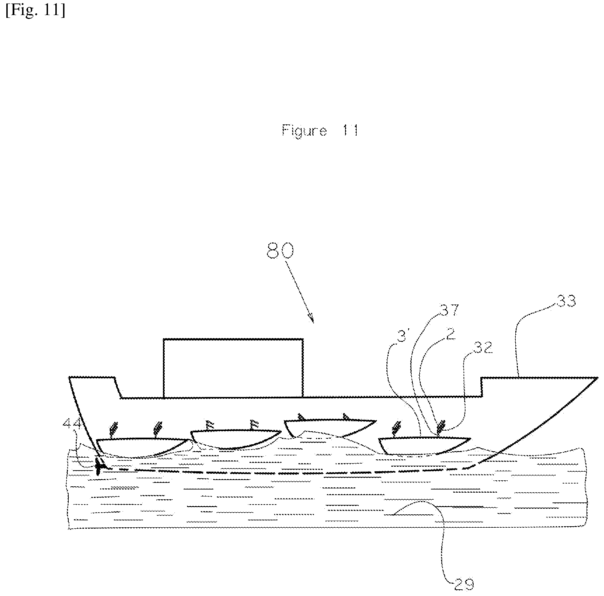

The one-way switch (11) is mounted on a bracket (82) tensioned by a spring (24) resting on the secondary input gear (4) Fig. 2 and 3, or on the input accumulative gear (21) Fig. 4 and 11, and serves to retain the torsion spring ( 5) tightened when lowering the floats (3), and again allows the secondary and other gears to rotate when raising the floats, which tension the accumulative spring (5). The one-way switch (11) contains a single-purpose electric piston (84) that serves to release said switch (11) from the secondary gear.

The single-purpose electric piston (84) is activated together with the DC electric motor (54) when rotated counterclockwise, to lower the floats (3) into the operating position. The secondary input gear (4) is attached together with the output secondary gear (19) to the secondary shaft (46). The secondary shaft (46) is mounted rotating on the bearings (53).

The secondary output gear (19) is connected to the accumulative input gear (21) which is fixed to the accumulative shaft (36). It is preferable to use different dimensions of the gears in such a way that the number of rotations of the accumulative shaft increases in relation to the secondary shaft (46). Accumulator shaft (36) is mounted rotating on bearings (76).

The accumulative spring (5) with the first end (75) is fixed to the accumulative output gear (43), which rotates with the bearing (51) sliding on the accumulative shaft (36), whereby the accumulative spring (5) with the second end (71) is fixed firmly on the accumulator shaft (36).

In this way, any upward movement of any float (3) in relation to the body of the converter, stretches and turns the constant accumulative spring (5), whereby as many floats that move up and down differently make up one converter that has at least one accumulative spring (5), which is wound on its end (71) stepwise by at least one float, whereby said spring, with the other end (75), rotates the accumulative output gear (43) evenly.

The accumulative output gear (43) is connected to the input gear (55) on the gearbox (40), which has an output gear or any transmission element (61) and preferably a flywheel (77) connected by a gear, chain or belt (22) to consumers such as generator (6), alternator (10), propeller (44), and various pumps.

All mentioned and drawn gears can be replaced with pulleys, sprockets or other transmission elements, so that the mentioned gears do not limit the character of the invention but serve to clarify the invention.

It is recommended that the primary gear (1) be larger than the secondary gear by, for example: 1/3 rotation of the primary gear rotates one or more rotations of the secondary gear, and even more rotates the accumulative shaft (36), which with the accumulative spring (5) accumulates energy and keeps the rotation of the accumulative output gear (43) constant and uniform during lowering and raising floats (3).

This is achieved because the torsion spring on one side is wrapped in steps with floats, while on the other side it is loaded with energy consumers. In this way, it accumulates a large number of rotations and maintains an even rotation of the output accumulative gear (43). The accumulative output gear (43) is connected directly to the gearbox (40) which serves to increase the number of rotations, to change the direction of rotation or to stop the rotation, which is connected to the energy consumers.

The connection of the arm (2) and the body of the converter is secured by a waterproof cv boot (15).

Accumulator output gear (43) has an extended drum (41) where electromagnetic or mechanical brakes (20) are mounted, Fig. 3,4 and 11.

Under the primary gear (1) is a container (67), for lubrication, in which there is oil (23), which the lower gears transmit and lubricate the other gears.

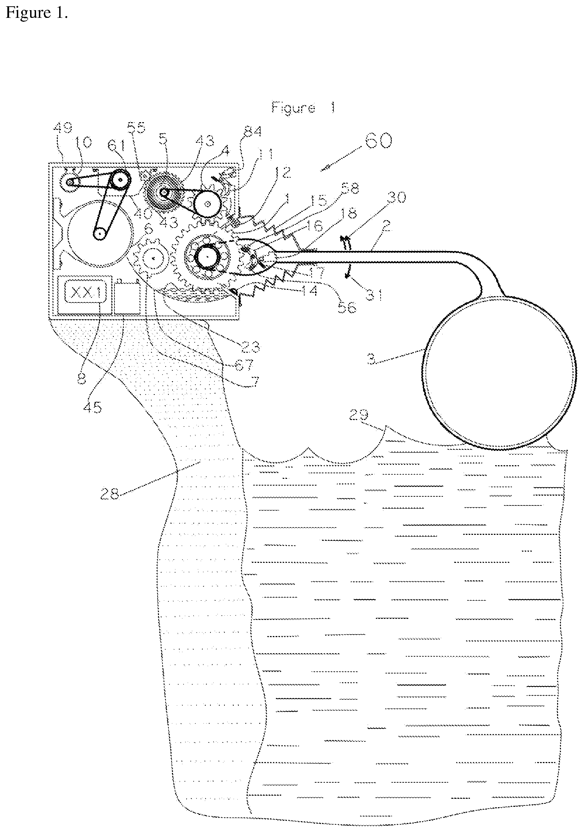

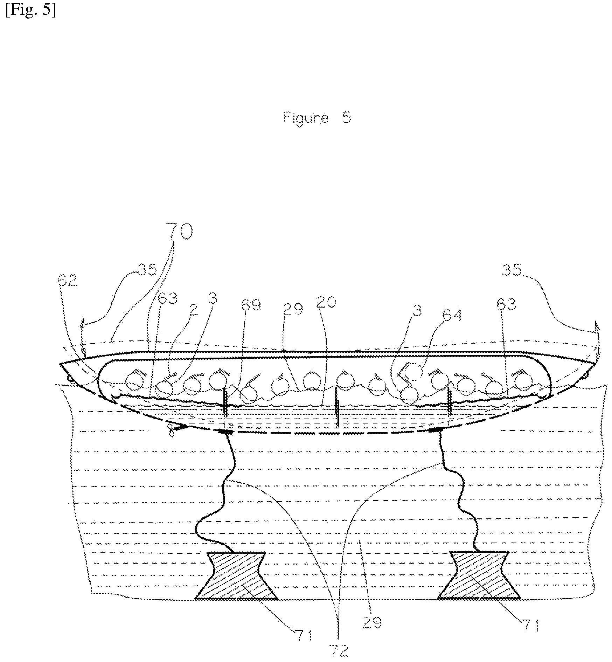

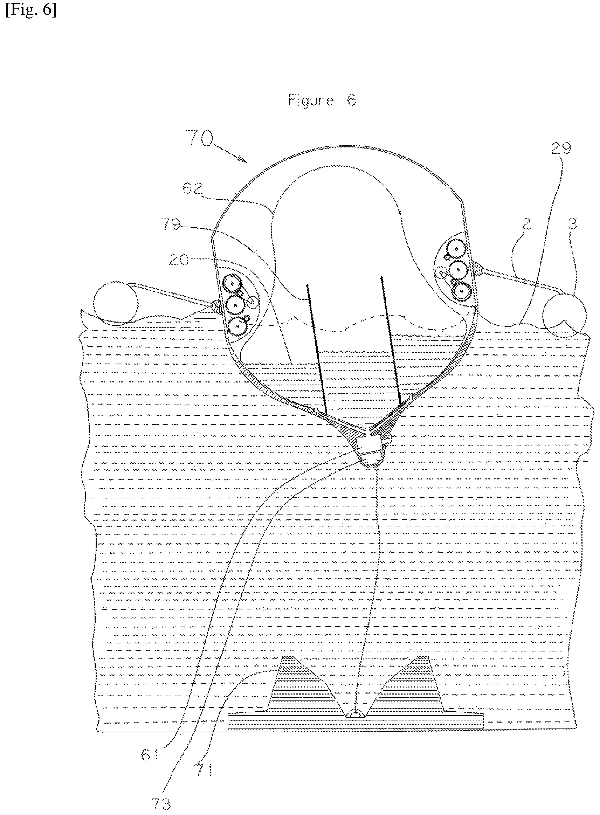

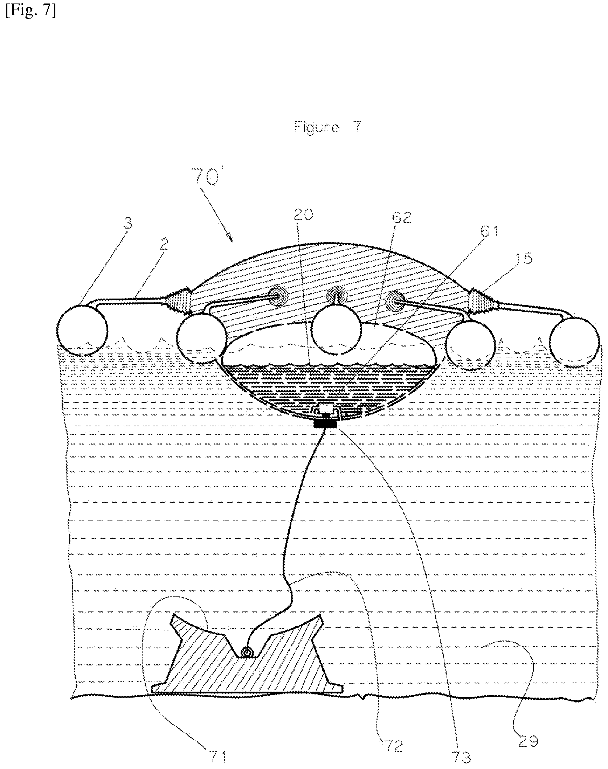

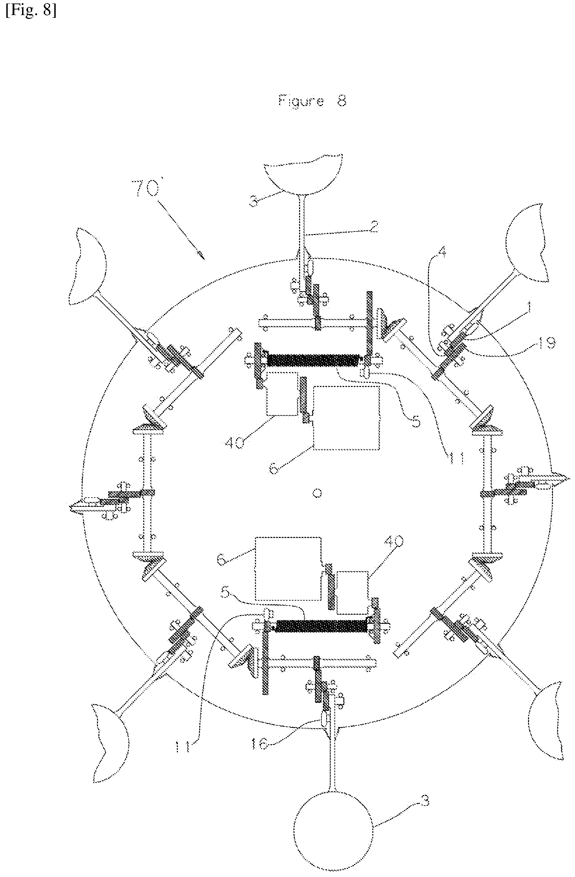

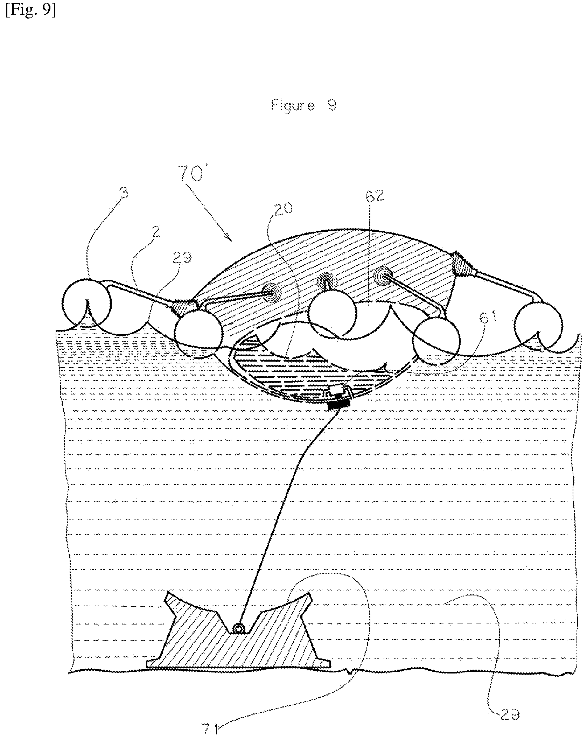

This new converter is intended to be used as a multi-dimensional energy producer constructed in 3 different models.
1. Stationary converter (60) for fixed surfaces Figure 1. The converter is attached to the flat surface of the shore (28) above the water surface with extended arms (2), on the tops of which are mounted floats that float on the surface of the water and follow the movement of sea waves, figure 1.
2. Floating converter (70) for floating objects in the form of a boat or submarine, Fig. 4,5,6, and in the form of a floating saucer (70'), Fig. 7 and 8. This type of floating power plants are intended to be anchored in the ocean (29 ) close to or further from the coast on their concrete bases (71) which are installed on the ocean floor figures 5,7 and 9.

Floating power plants operate on the surface of the water by collecting energy with floats that move up and down under the influence of waves and under the influence of the swaying of a floating object that is significantly larger than the floats, resulting in opposite movements. In order to achieve a better result during smaller waves, the floating power plant in the form of a boat is equipped with a tank (62), longitudinal partitions and transverse partitions in the said tank.

Longitudinal partitions (79) are preferably fixed and watertight, while transverse partitions (69) are adjustable with stepwise opening and closing, in order to control the degree of rocking of the power plant.

The floating power plants are equipped with a pump (61) which serves to fill and empty a certain amount of liquid (20) into the tank (62) in order to increase the effect of the different rocking (35) of the floating power plant (70 and 70') in relation to the rocking of the floats (3), Fig. 5.

This new floating power plant has a winch (73) with a stainless cable (72) and serves to limit the space of movement of the anchored power plant to the surface of the ocean and withdraw the power plant to its base (71) with the activation of the pump (61) to fill the tank (62).

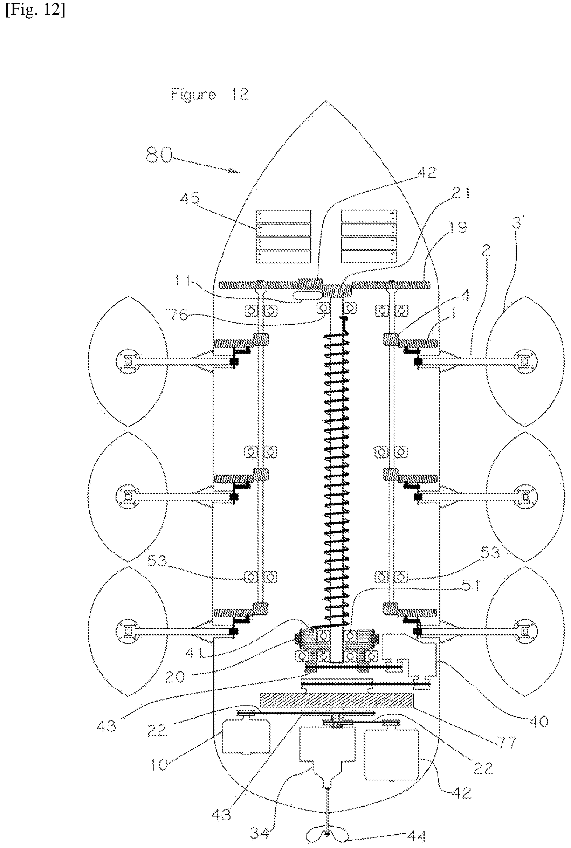

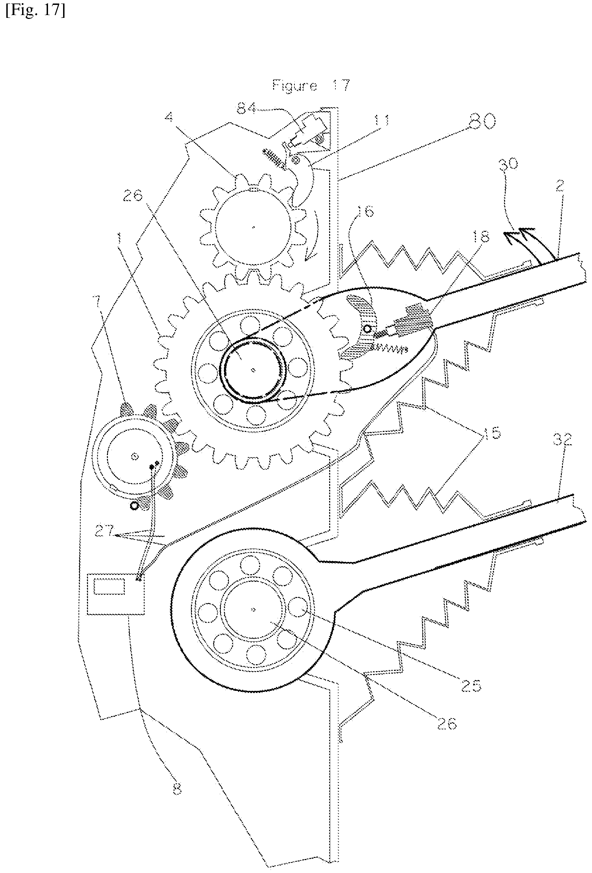

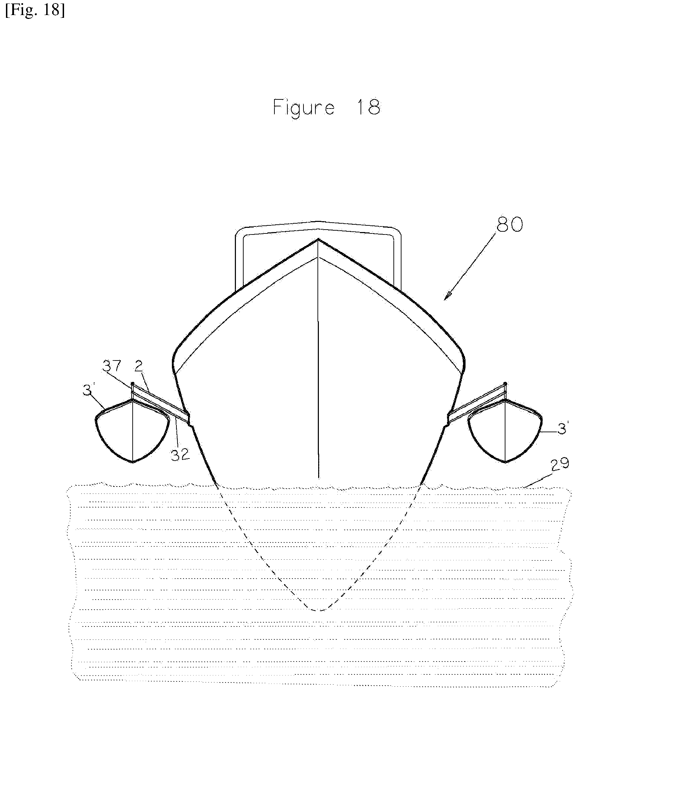

3. Propulsion converter (80) for vessels, Fig. 11, 12, 17 and 18, where you can see the combined drive with a multipurpose energy converter and a battery-powered electric motor.

The effective construction of this converter can result in useful sports, cargo and any other vessels that travel in rough ocean waters.

The aerodynamic float has vertically attached supports (37) to which the ends of the arm (2) and the auxiliary arm (32) are connected with joints (38) and (39) so that the aerodynamic floats stand horizontally while moving up and down relative to the vessel ( 80), and in this way collect high energy that can be used for propulsion and for stabilizing the vessel during movement under larger waves.

When it comes to bigger waves, there is an excess of energy production and an increased number of rotations.

This new device has multiple mechanisms to maintain constant production of stable power and normal operation of the inverter and protect the inverter in bad weather conditions and strategic water currents, such as long and high sea waves of high kinetic energy, tsunami or the like.

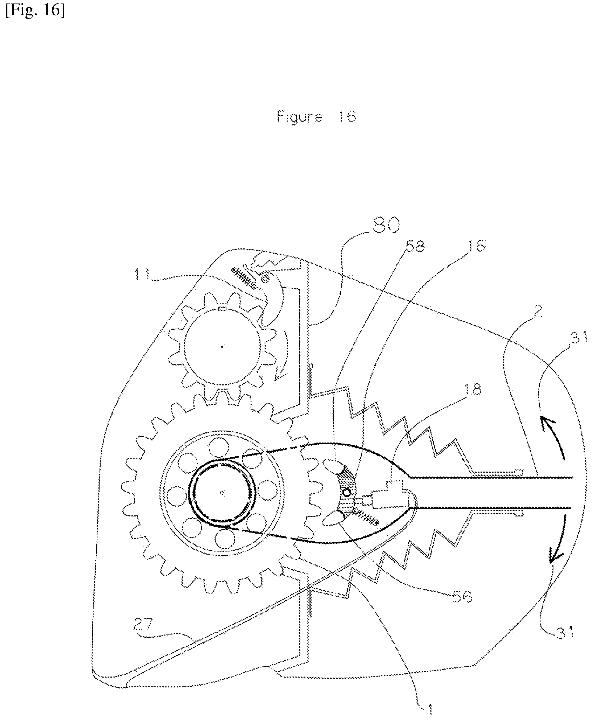

The multipurpose converter of wave energy into rotational energy is provided with the following protections in the event of larger waves:
1. The first mechanism for limiting energy when the number of rotations is increased is the alternator (10), connected by the installation (27), which is activated by the electronic controller (8) and uses the excess energy produced to store energy in the batteries (45), so that the alternator with its consumption of energy serves as a mild rotation limiter and for charging the battery.
2. As another option for limiting the increased rotation, the floats can be turned off individually using the two-way switch (16), [Fig.16].
3. The third limiter for the exceeded produced energy is the activation of the electromagnetic or mechanical brake (20).
4. A fourth option to protect the converter in higher waves is to activate the two-way switch (16) to lock with the lower gear (56) in the primary gear (1) simultaneously with the DC electric motor (54), which rotates the primary gear (1), with the half gear (7) and lifts the floats above the surface of the water.

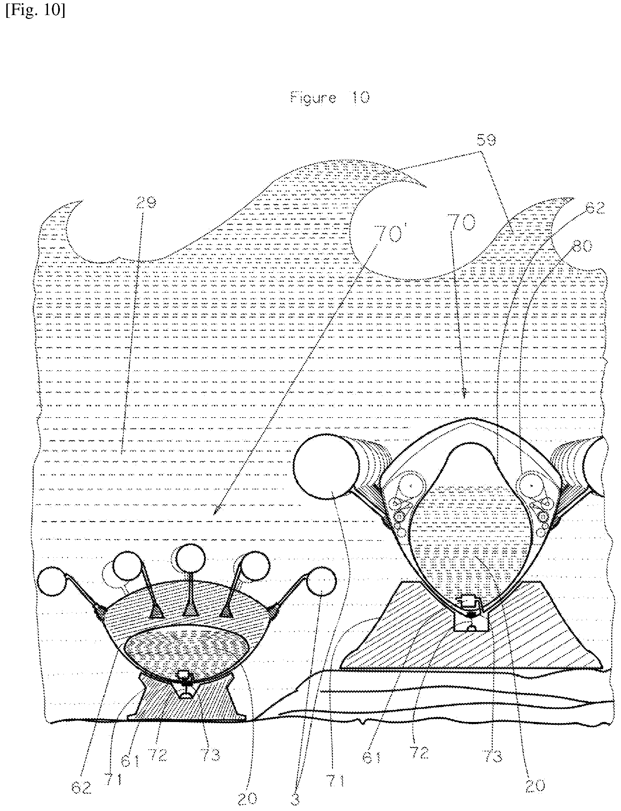

The next two options only apply to floating power plants:
5. When the excess energy continues to grow, the electronic controller (8) of the floating power plant closes the transverse partitions (69), so that the liquid (20) is partitioned into several smaller chambers and thus stops acting as a destabilizer of the body of the floating power plant.
6. When the sea waves are very long and high, such as a tsunami (59) [Fig.10], which threatens as a danger to damage the power plant, then the electronic controller (8) activates the pump (61) to fill the tank (62) with sea water, marked as liquid (20), so that the power plant can sink with the help of a winch (73) on the bottom of the sea to its bed (71), picture 10.

When the danger passes, the pump (61) empties the tank of the floating power plant and thus returns the power plant to the surface of the water to resume its normal operation.

## Claims

1. A multipurpose wave energy converter designed for stationary and floating platforms to produce electricity, for the movement of vessels, and to supply rotational energy to various consumers in vessels, the wave energy converter comprising:
- a body (49) of the converter, which also includes a container (67) for lubrication,
- at least one float (3),
- at least one primary gear (1) for transferring wave energy into rotational energy,
- at least one arm (2) for connecting the float and the primary gear (1),
- at least one accumulative shaft (36),
- at least one secondary shaft (46) for increasing the number of revolutions,
- at least one generator (6) for production of electricity,
- at least one battery (25) for storing electricity,
- at least one alternator (10) for charging the battery (25),
- at least one speed changer (40) to increase the number of revolutions,
- at least one electronic controller (8), and
- at least one DC electric motor or hydraulic motor (54) for lifting the float above the water surface,
wherein the accumulative shaft (36) contains an accumulative spring (5), which can be a torsion or spiral spring that is fixed in a mechanical interface that can only rotate in one direction,
wherein the accumulative spring (5) includes an output accumulative gear (43) with a drum (41) wherein the accumulative spring (5) is fixed with a first end (75) where electromagnetic or mechanical brakes (20) are installed, wherein the output accumulative gear (43) is rotatably mounted on the accumulative shaft (36), so that said first end of the spring and said gear (43) rotate together on the accumulative shaft (36), wherein the accumulative spring (5) with the other end (71) is attached to the accumulative shaft (36), which has fixed at least one input accumulative gear (21) connected to an output secondary gear (19).

2. The multipurpose wave energy converter according to claim 1, wherein the arm (2) with the first end is mounted on the primary gear (1) in a rotating manner with a limited travel on an upper stop (12) and on a lower stop (15), configured so that it enables the movement of the arm (2) up and down in relation to the body (49), and protected by a waterproof CV boot (15), while the arm (2) has a float (3) mounted on the other end.

3. The multipurpose wave energy converter according to claim 1 or 2, wherein the arm (2) contains a two-way switch (16) that enables multi-purpose connection and disconnection of the arm (2) with the primary gear (1),
wherein the two-way switch (16) has a semicircular shape, with an upper tooth (58) on the upper end, and a lower tooth (56) on the lower end, mounted in the center with a shaft on the arm (2) by allowing the upper or lower mentioned teeth to mesh alternately with the primary gear (1).

4. The multipurpose wave energy converter according to claim 3, wherein the two-way switch (16) contains a tension spring (17) that constantly pulls the two-way switch (16) toothed with the upper tooth (58) on the primary gear (1), so that during raising the float (3) upwards in relation to the body (49), the two-way switch (16) connects the arm (2) and the primary gear (1), and when the float (3) is lowered, it separates the said arm by sliding over the primary gear (1).

5. The multipurpose wave energy converter according to any one of claims 3 to 4, wherein the two-way switch (16) contains an electromagnetic or hydraulic dual-purpose piston (18) that functions in three positions and is activated automatically by an electronic command (8) or manually with electrical switches (81).

6. The multipurpose wave energy converter according to claim 5, wherein the dual-purpose piston (18):
- in the first position, it stands folded and does not touch the two- way switch (16),
- in the second position, it pushes the two-way switch and disconnects both teeth of the two-way switch (16) from the primary gear (1), and
- in the third position, the dual-purpose piston (18) connects the lower tooth (56) with the primary gear (1), while at the same time activates the DC electric motor (54) which with its half gear (7) drives the gear (1) and raises the float above the water surface.

7. The multipurpose wave energy converter according to any one of claims 1 to 6, wherein the secondary shaft (46) contains at least one input secondary gear (4) and the output secondary gear (19) welded to said secondary shaft which is rotatably mounted, and which has connected input secondary gear (4) to primary gear (1).

8. The multipurpose wave energy converter according to claim 7, wherein the input secondary gear (4) comprises at least one one-way switch (11) axially mounted on an arm (82) tensioned by a spring (24) to hold the one-way switch (11), toothed on the input secondary gear (4), in a way that allows it to rotate only clockwise, while looking at the converter when the float (3) is positioned on the right side of the converter.

9. Multipurpose wave energy converter according to claim 8, wherein the one-way switch (11) contains a single-purpose electric piston (84), which releases the one-way switch (11) from the input secondary gear, when the DC electric motor (54) is turned on, to lower the float (3) to the surface of the water.

10. The multipurpose wave energy converter according to any one of claims 1 to 9, wherein the upward movement of at least one float (3) relative to the body (49) of the converter, tightens and rotates the stepwise accumulative spring (5) at the end (71), wherein said the spring with the end (75) rotates evenly the output accumulative gear (43) which is connected to the speed changer (40) for increasing the speed, to which consumers such as the generator (6), the alternator ( 10), the marine propeller (44) are connected, pumps, and various other consumers.

11. The multipurpose wave energy converter according to any one of claims 1 to 10, wherein this converter is intended to be used as a multipurpose wave energy converter, constructed in three different models:
- stationary model (60) for fixing the wave energy converter preferably on a flat surface of the coast above the surface of the water with extended arms (2) and floats to float on the surface of the water towards the sea waves moving up and down in relation to the body (49) of the converter,
- a floating model (70) in the form of a boat or submarine or in the form of a floating saucer (70') for converting the energy of ocean waves into electrical energy containing its concrete bases (71) for anchoring, and
- propulsion model (80) which refers to sports, cargo and any other vessels moving in wavy waters, using for propulsion the proposed wave energy converter in combination with a battery-powered electric motor or any other type of motor.

12. The multipurpose wave energy converter according to claim 11, wherein the converter in the form of a floating power plant is intended to be anchored in the ocean near or far from the coast on its concrete base (71), which is installed on the ocean floor, wherein the power plant operates on the surface of the water, by using energy with the floats rising and falling under the influence of the waves and under the influence of the swaying of the floating object, which is significantly larger than the floats, resulting in opposite movements, and/or
wherein the converters in the form of floating power plants include a tank (62) with longitudinal and transverse partitions, wherein the longitudinal partitions (79) are fixed and preferably watertight, while the transverse partitions (69) are adjustable with automatic stepped opening and closing to control water ripples (20) and rocking of the power plant.

13. The multipurpose wave energy converter according to claim 11 or 12, wherein the converters in the form of floating power plants contain a pump (61) that serves to fill and empty a certain amount of ocean liquid (20) into the tank (62), to increase the effect of different rocking of the power plant and floats, and/or
wherein the converters in the form of floating power plants contain a winch (73) with a stainless cable (72) that serves to limit the space of movement of the anchored power plant on the surface of the ocean, and to pull the power plant into its base (71), with the activation of the tank filling pump (62).

14. The multipurpose wave energy converter according to any one of claims 11 to 13, wherein the vessel propulsion converters contain aerodynamic floats (3') that slide on the surface of the water and use wave energy while the vessel is moving, and convert this energy into rotational energy for propulsion of said vessel, and/or
wherein the vessel propulsion converters comprise auxiliary supports (32) and vertical supports (37) for holding the aerodynamic float (3') horizontally as it moves up and down in relative to the vessel (80).

15. The multipurpose wave energy converter according to any one of claims 1 to 14, wherein the converter has multiple mechanisms for maintaining a stable conversion of wave energy into rotational energy and for protecting the converter in bad weather conditions and extreme water currents with the following protections:
- a first mechanism that is activated by the controller (8) due to the increased number of revolutions is the alternator (10), which uses the excess energy produced to charge and store energy in the batteries (45),
- a second protection of the converter is the individual disconnection of the floats by means of two-way switches (16),
- a third protection is the activation of the electromagnetic or mechanical brake (20),
- a fourth protection is the activation of the two-way switch (16) to block with the lower tooth (56) in the primary gear (1) simultaneously with the DC electric motor (54), which with the half gear (7) drives the primary gear (1) and raises the floats above the water surface, and the next two possibilities that only apply to floating power plants are:
- automatic closing of the transverse partitions (69) in the tank (62) of the floating power plant by means of the electronic controller (8) by dividing the liquid (20) into several smaller chambers, and in this way the liquid (20) stops acting as a destabilizer of the power plant body, and
- when it comes to extreme sea waves such as tsunamis, which threaten to damage the power plant, the multipurpose wave energy converter uses a pump (61) to fill a tank (62) with seawater so that the power plant can be sunk using a winch (73) at the bottom of the sea to its base (71), and when the danger passes, the pump (61) empties the tank of the floating power plant and in this way returns the power plant to the surface of the water to continue its normal functioning.

## Patentansprüche

1. Mehrzweck-Wellenenergiewandler, der für stationäre und schwimmende Plattformen zur Stromerzeugung, zum Bewegen von Schiffen und zum Zuführen von Rotationsenergie zu verschiedenen Verbrauchern in Schiffen ausgelegt ist, wobei der Wellenenergiewandler aufweist:
einen Körper (49) des Wandlers, der auch einen Behälter (67) für eine Schmierung aufweist;
mindestens einen Schwimmkörper (3);
mindestens ein Primärzahnrad (1) zum Umwandeln von Wellenenergie in Rotationsenergie;
mindestens einen Arm (2) zum Verbinden des Schwimmkörpers und des Primärzahnrades (1);
mindestens eine akkumulative Welle (36);
mindestens eine Sekundärwelle (46) zur Drehzahlerhöhung;
mindestens einen Generator (6) zur Stromerzeugung;
mindestens eine Batterie (25) zum Speichern von Strom;
mindestens einen Ladegenerator (10) zum Laden der Batterie (25);
mindestens einen Drehzahlwandler (40) zum Erhöhen der Drehzahl;
mindestens eine elektronische Steuereinheit (8); und
mindestens einen Gleichstrommotor oder Hydraulikmotor (54) zum Anheben des Schwimmkörpers über die Wasseroberfläche,
wobei die akkumulative Welle (36) eine akkumulative Feder (5) aufweist, die eine Torsions- oder Spiralfeder sein kann, die an einer mechanischen Schnittstelle befestigt ist, die sich nur in eine Richtung drehen kann,
wobei die akkumulative Feder (5) ein akkumulatives Ausgangszahnrad (43) mit einer Trommel (41) aufweist, wobei die akkumulative Feder (5) an einem ersten Ende (75) fixiert ist, an dem elektromagnetische oder mechanische Bremsen (20) installiert sind, wobei das akkumulative Ausgangszahnrad (43) drehbar auf der akkumulativen Welle (36) montiert ist, so dass das erste Ende der Feder und das Zahnrad (43) sich gemeinsam auf der akkumulativen Welle (36) drehen, wobei die akkumulative Feder (5) am anderen Ende (71) an der akkumulativen Welle (36) befestigt ist, an der mindestens ein akkumulatives Eingangszahnrad (21) fixiert ist, das mit einem Ausgangs-Sekundärzahnrad (19) verbunden ist.

2. Mehrzweck-Wellenenergiewandler nach Anspruch 1, wobei der Arm (2) am ersten Ende auf eine drehbare Weise mit einem durch einen oberen Anschlag (12) und einen unteren Anschlag (15) begrenzten Bewegungsweg auf dem Primärzahnrad (1) montiert ist, derart konfiguriert, dass die Bewegung des Arms (2) nach oben und unten in Bezug auf den Körper (49) ermöglicht wird, und durch eine wasserdichte CV-Manschette (15) geschützt ist, während der Arm (2) einen am anderen Ende montierten Schwimmkörper (3) aufweist.

3. Mehrzweck-Wellenenergiewandler nach Anspruch 1 oder 2, wobei der Arm (2) einen Zweiwegeschalter (16) aufweist, der ein Mehrzweck-Verbinden und Trennen des Arms (2) mit bzw. von dem Primärzahnrad (1) ermöglicht,
wobei der Zweiwegeschalter (16) eine halbkreisförmige Form mit einem oberen Zahn (58) am oberen Ende und einem unteren Zahn (56) am unteren Ende aufweist, in der Mitte auf einer Welle auf dem Arm (2) montiert ist, so dass ermöglicht wird, dass der obere oder der untere Zahn alternierend mit dem Primärzahnrad (1) in Eingriff kommt.

4. Mehrzweck-Wellenenergiewandler nach Anspruch 3, wobei der Zweiwegeschalter (16) eine Zugfeder (17) aufweist, die den Zweiwegeschalter (16) ständig derart zieht, dass sein oberer Zahn (58) mit dem Primärzahnrad (1) in Eingriff steht, so dass während des Anhebens des Schwimmkörpers (3) in Bezug auf den Körper (49) der Zweiwegeschalter (16) den Arm (2) und das Primärzahnrad (1) verbindet und beim Absenken des Schwimmkörpers (3) den Arm durch Gleiten über das Primärzahnrad (1) trennt.

5. Mehrzweck-Wellenenergiewandler nach Anspruch 3 oder 4, wobei der Zweiwegeschalter (16) einen elektromagnetischen oder hydraulischen Doppelzweckkolben (18) aufweist, der in drei Positionen funktioniert und automatisch durch einen elektronischen Befehl (8) oder manuell durch elektrische Schalter (81) aktiviert wird.

6. Mehrzweck-Wellenenergiewandler nach Anspruch 5, wobei der Doppelzweckkolben (18):
in der ersten Position eingefahren bleibt und den Zweiwegeschalter (16) nicht berührt,
in der zweiten Position den Zweiwegeschalter drückt und beide Zähne des Zweiwegeschalters (16) vom Primärzahnrad (1) trennt, und
in der dritten Position der Doppelzweckkolben (18) den unteren Zahn (56) mit dem Primärzahnrad (1) verbindet und gleichzeitig den Gleichstrommotor (54) aktiviert, der mit seinem Halbzahnrad (7) das Zahnrad (1) antreibt und den Schwimmkörper über die Wasseroberfläche anhebt.

7. Mehrzweck-Wellenenergiewandler nach einem der Ansprüche 1 bis 6, wobei die Sekundärwelle (46) mindestens ein Eingangs-Sekundärzahnrad (4) und das Ausgangs-Sekundärzahnrad (19) aufweist, die auf die Sekundärwelle geschweißt sind, die drehbar montiert ist, wobei das Eingangs-Sekundärzahnrad (4) mit dem Primärzahnrad (1) verbunden ist.

8. Mehrzweck-Wellenenergiewandler nach Anspruch 7, wobei das Eingangs-Sekundärzahnrad (4) mindestens einen Einwegeschalter (11) aufweist, der axial auf einem Arm (82) montiert ist, der durch eine Feder (24) gespannt wird, um den Einwegschalter (11) in Eingriff mit dem Eingangs-Sekundärzahnrad (4) zu halten, so dass es sich nur im Uhrzeigersinn drehen kann, wenn der Wandler betrachtet wird, während sich der Schwimmkörper (3) auf der rechten Seite des Wandlers befindet.

9. Mehrzweck-Wellenenergiewandler nach Anspruch 8, wobei der Einwegeschalter (11) einen Einzweck-Elektrokolben (84) aufweist, der den Einwegeschalter (11) vom Eingangs-Sekundärzahnrad trennt, wenn der Gleichstrommotor (54) eingeschaltet wird, um den Schwimmkörper (3) auf die Wasseroberfläche abzusenken.

10. Mehrzweck-Wellenenergiewandler nach einem der Ansprüche 1 bis 9, wobei die Aufwärtsbewegung mindestens eines Schwimmkörpers (3) relativ zum Körper (49) des Wandlers die stufenweise akkumulative Feder (5) am Ende (71) strafft und dreht, wobei die Feder mit dem Ende (75) das akkumulative Ausgangszahnrad (43), das mit dem Drehzahlwandler (40) zur Drehzahlerhöhung verbunden ist, gleichmäßig dreht, mit dem Verbraucher wie der Generator (6), der Ladegenerator (10), der Schiffspropeller (44), Pumpen und verschiedene andere Verbraucher verbunden sind.

11. Mehrzweck-Wellenenergiewandler nach einem der Ansprüche 1 bis 10, wobei der Wandler zur Verwendung als Mehrzweck-Wellenenergiewandler vorgesehen ist und in drei verschiedenen Modellen ausgelegt ist:
stationäres Modell (60) zum Fixieren des Wellenenergiewandlers vorzugsweise auf einer ebenen Fläche an der Küste über der Wasseroberfläche mit verlängerten Armen (2) und Schwimmkörpern, die auf der Wasseroberfläche in Richtung zu den Meereswellen schwimmen und sich in Bezug auf den Körper (49) des Wandlers auf- und abwärts bewegen;
ein schwimmendes Modell (70) in Form eines Bootes oder U-Boots oder in Form einer schwimmenden Untertasse (70') zum Umwandeln der Energie von Meereswellen in elektrische Energie, das Betonfundamente (71) zum Verankern aufweist; und
ein Antriebsmodell (80), das mit Sport-, Fracht- und anderen Wasserfahrzeugen in Beziehung steht, die sich in welligen Gewässern bewegen, und zum Antreiben den vorgeschlagenen Wellenenergiewandlers in Kombination mit einem batteriebetriebenen Elektromotor oder einem andersartigen Motor verwenden.

12. Mehrzweck-Wellenenergiewandler nach Anspruch 11, wobei der Wandler in der Form eines schwimmenden Kraftwerks dazu bestimmt ist, im Ozean in Küstennähe oder entfernt von der Küste auf seinem Betonfundament (71) verankert zu werden, das auf dem Meeresboden installiert ist, wobei das Kraftwerk an der Wasseroberfläche arbeitet, indem es Energie nutzt, die durch das Auf- und Absteigen der Schwimmkörper unter dem Einfluss der Wellen und unter dem Einfluss des Schwankens des schwimmenden Objekts entseht, das deutlich größer ist als die Schwimmkörper, was zu entgegengesetzten Bewegungen führt, und/oder
wobei die Wandler in der Form von schwimmenden Kraftwerken einen Tank (62) mit Längs- und Quertrennwänden aufweisen, wobei die Längswände (79) fixiert und vorzugsweise wasserdicht sind, während die Quertrennwände (69) durch automatisches stufenweises Öffnen und Schließen einstellbar sind, um Wasserkräuselungen (20) und ein Schwanken des Kraftwerks zu steuern.

13. Mehrzweck-Wellenenergiewandler nach Anspruch 11 oder 12, wobei die Wandler in der Form von schwimmenden Kraftwerken eine Pumpe (61) aufweisen, die dazu dient, eine bestimmte Menge an Meeresflüssigkeit (20) in den Tank (62) zu füllen und den Tank zu leeren, um die Wirkung von unterschiedlichem Schwanken des Kraftwerks und der Schwimmkörper zu verstärken, und/oder
wobei die Wandler in der Form von schwimmenden Kraftwerken eine Winde (73) mit einem rostfreien Kabel (72) aufweisen, das dazu dient, beim Aktivieren der Tankfüllpumpe (62) den Bewegungsraum des verankerten Kraftwerks auf der Meeresoberfläche zu begrenzen und das Kraftwerk in seine Basis (71) zu ziehen.

14. Mehrzweck-Wellenenergiewandler nach einem der Ansprüche 11 bis 13,
wobei die Schiffsantriebswandler aerodynamische Schwimmkörper (3') aufweisen, die auf der Wasseroberfläche gleiten und Wellenenergie nutzen, während sich das Schiff bewegt, und diese Energie in Rotationsenergie für den Antrieb des Schiffs umwandeln, und/oder
wobei die Schiffsantriebswandler Hilfshalterungen (32) und vertikale Halterungen (37) zum horizontalen Halten des aerodynamischen Schwimmkörpers (3') aufweisen, wenn dieser sich relativ zum Schiff (80) auf- und abwärts bewegt.

15. Mehrzweck-Wellenenergiewandler nach einem der Ansprüche 1 bis 14,
wobei der Wandler mehrere Mechanismen zum Aufrechterhalten einer stabilen Umwandlung von Wellenenergie in Rotationsenergie und zum Schützen des Wandlers bei schlechten Wetterbedingungen und extremen Wasserströmungen mit den folgenden Schutzvorrichtungen aufweist:
ein erster Mechanismus, der aufgrund der erhöhten Drehzahl durch die Steuerung (8) aktiviert wird, ist der Ladegenerator (10), der die erzeugte überschüssige Energie zum Laden und Speichern von Energie in den Batterien (45) nutzt;
ein zweiter Schutz des Wandlers ist das individuelle Trennen der Schwimmkörper mittels Zweiwegeschaltern (16);
ein dritter Schutz ist das Aktivieren der elektromagnetischen oder mechanischen Bremse (20);
ein vierter Schutz ist das Aktivieren des Zweiwegeschalters (16) zum Blockieren, wobei der untere Zahn (56) mit dem Primärzahnrad (1) in Eingriff steht, gleichzeitig mit dem Gleichstrommotor (54), mit dem das Halbzahnrad (7) das Primärzahnrad antreibt und die Schwimmkörper über die Wasseroberfläche anhebt; und
die nächsten beiden Optionen, die nur für schwimmende Kraftwerke gelten, sind:
automatisches Schließen der Quertrennwände (69) im Tank (62) des schwimmenden Kraftwerks mittels der elektronischen Steuereinheit (8), wobei die Flüssigkeit (20) in mehreren kleineren Kammern aufgeteilt wird, wodurch die Flüssigkeit (20) nicht mehr als Destabilisator des Kraftwerkskörpers wirkt; und
wenn es zu extremen Meereswellen wie Tsunamis kommt, die das Kraftwerk zu beschädigen drohen, verwendet der Mehrzweck-Wellenenergiewandler eine Pumpe (61) zum Füllen eines Tanks (62) mit Meerwasser, so dass das Kraftwerk unter Verwendung einer Winde (73) auf den Meeresgrund zu seiner Basis (71) abgesenkt werden kann, und wenn die Gefahr vorüber ist, entleert die Pumpe (61) den Tank des schwimmenden Kraftwerks und bringt das Kraftwerk auf diese Weise wieder an die Wasseroberfläche zurück, so dass es seinen normalen Betrieb fortsetzen kann.

## Revendications

1. Convertisseur d'énergie houlomotrice multifonction conçu pour des plateformes stationnaires et flottantes pour produire de l'électricité, pour le déplacement de navires, et pour fournir une énergie de rotation à divers consommateurs dans les navires, le convertisseur d'énergie houlomotrice comprenant :
- un corps (49) du convertisseur, qui inclut également un récipient (67) de lubrification,
- au moins un flotteur (3),
- au moins un engrenage primaire (1) pour transformer l'énergie houlomotrice en énergie de rotation,
- au moins un bras (2) pour accoupler le flotteur et l'engrenage primaire (1),
- au moins un arbre accumulatif (36),
- au moins un arbre secondaire (46) pour l'augmentation du nombre de tours,
- au moins un générateur (6) pour la production d'électricité,
- au moins une batterie (25) pour le stockage d'électricité,
- au moins un alternateur (10) pour la charge de la batterie (25),
- au moins un variateur de vitesse (40) pour augmenter le nombre de tours,
- au moins un contrôleur électronique (8), et
- au moins un moteur électrique à courant continu ou moteur hydraulique (54) pour soulever le flotteur au-dessus de la surface de l'eau,
dans lequel l'arbre accumulatif (36) contient un ressort accumulatif (5), qui peut être un ressort de torsion ou un ressort hélicoïdal qui est fixé dans une interface mécanique qui ne peut tourner que dans une direction,
dans lequel le ressort accumulatif (5) inclut un engrenage accumulatif de sortie (43) avec un tambour (41) dans lequel le ressort accumulatif (5) est fixé à une première extrémité (75) sur laquelle sont installés des freins électromagnétiques ou mécaniques (20), dans lequel l'engrenage accumulatif de sortie (43) est monté de manière rotative sur l'arbre accumulatif (36), de telle sorte que ladite première extrémité du ressort et ledit engrenage (43) tournent ensemble sur l'arbre accumulatif (36), dans lequel le ressort accumulatif (5) avec l'autre extrémité (71) est attaché à l'arbre accumulatif (36), lequel présente au moins un engrenage accumulatif d'entrée fixe (21) relié à un engrenage secondaire de sortie (19).

2. Convertisseur d'énergie houlomotrice multifonction selon la revendication 1, dans lequel le bras (2) avec la première extrémité est monté sur l'engrenage primaire (1) d'une manière rotative avec une course limitée sur une butée supérieure (12) et sur une butée inférieure (15), configuré de telle sorte qu'il permet le déplacement du bras (2) vers le haut et le bas par rapport au corps (49), et protégé par un soufflet de cardan étanche (15), tandis que le bras (2) présente un flotteur (3) monté sur l'autre extrémité.

3. Convertisseur d'énergie houlomotrice multifonction selon la revendication 1 ou 2, dans lequel le bras (2) contient un commutateur à deux voies (16) qui permet un accouplement et un désaccouplement multifonctions du bras (2) avec l'engrenage primaire (1),
dans lequel le commutateur à deux voies (16) a une forme semi-circulaire, avec une dent supérieure (58) sur l'extrémité supérieure, et une dent inférieure (56) sur l'extrémité inférieure, monté au centre avec un arbre sur le bras (2) en laissant les dents supérieure et inférieure s'engrener en alternance avec l'engrenage primaire (1).

4. Convertisseur d'énergie houlomotrice multifonction selon la revendication 3, dans lequel le commutateur à deux voies (16) contient un ressort de tension (17) qui tire constamment sur le commutateur à deux voies (16) engrené avec la dent supérieure (58) sur l'engrenage primaire (1), de telle sorte que lorsque le flotteur (3) est soulevé par rapport au corps (49), le commutateur à deux voies (16) accouple le bras (2) et l'engrenage primaire (1), et lorsque le flotteur (3) est abaissé, il sépare ledit bras en glissant sur l'engrenage primaire (1).

5. Convertisseur d'énergie houlomotrice multifonction selon l'une quelconque des revendications 3 à 4, dans lequel le commutateur à deux voies (16) contient un piston à double fonction électromagnétique ou hydraulique (18) qui fonctionne dans trois positions et est activé automatiquement par une commande électronique (8) ou manuellement avec des commutateurs électriques (81).

6. Convertisseur d'énergie houlomotrice multifonction selon la revendication 5, dans lequel le piston à double fonction (18) :
- dans la première position, reste replié et n'est pas en contact avec le commutateur à deux voies (16),
- dans la deuxième position, pousse le commutateur à deux voies et désaccouple les deux dents du commutateur à deux voies (16) de l'engrenage primaire (1), et
- dans la troisième position, le piston à double fonction (18) accouple la dent inférieure (56) à l'engrenage primaire (1), et active simultanément le moteur électrique à courant continu (54) qui avec son demi-engrenage (7) entraîne l'engrenage (1) et soulève le flotteur au-dessus de la surface de l'eau.

7. Convertisseur d'énergie houlomotrice multifonction selon l'une quelconque des revendications 1 à 6, dans lequel l'arbre secondaire (46) contient au moins un engrenage secondaire d'entrée (4) et l'engrenage secondaire de sortie (19) soudé audit arbre secondaire qui est monté de manière rotative, et dont l'engrenage secondaire d'entrée (4) est accouplé à l'engrenage primaire (1).

8. Convertisseur d'énergie houlomotrice multifonction selon la revendication 7, dans lequel l'engrenage secondaire d'entrée (4) comprend au moins un commutateur à une voie (11) monté axialement sur un bras (82) tendu par un ressort (24) pour maintenir le commutateur à une voie (11), engrené sur l'engrenage secondaire d'entrée (4), de manière à le laisser tourner uniquement dans le sens horaire, lorsqu'on observe le convertisseur quand le flotteur (3) est positionné du côté droit du convertisseur.

9. Convertisseur d'énergie houlomotrice multifonction selon la revendication 8, dans lequel le commutateur à une voie (11) contient un piston électrique à fonction unique (84), qui libère le commutateur à une voie (11) de l'engrenage secondaire d'entrée, lorsque le moteur électrique à courant continu (54) est allumé, pour abaisser le flotteur (3) jusqu'à la surface de l'eau.

10. Convertisseur d'énergie houlomotrice multifonction selon l'une quelconque des revendications 1 à 9, dans lequel le mouvement ascendant de l'au moins un flotteur (3) par rapport au corps (49) du convertisseur, tend et fait tourner le ressort accumulatif progressif (5) au niveau de l'extrémité (71), dans lequel ledit ressort avec l'extrémité (75) fait tourner uniformément l'engrenage accumulatif de sortie (43) qui est relié au variateur de vitesse (40) pour augmenter la vitesse, auquel sont reliés des consommateurs tels que le générateur (6), l'alternateur (10), l'hélice marine (44), des pompes et divers autres consommateurs.

11. Convertisseur d'énergie houlomotrice multifonction selon l'une quelconque des revendications 1 à 10, dans lequel ce convertisseur est destiné à être utilisé en tant que convertisseur d'énergie houlomotrice multifonction, construit en trois modèles différents :
- un modèle stationnaire (60) pour fixer le convertisseur d'énergie houlomotrice de préférence sur une surface plane de la côte au-dessus de la surface de l'eau avec des bras (2) étendus et des flotteurs pour flotter à la surface de l'eau vers les vagues se déplaçant vers le haut et le bas par rapport au corps (49) du convertisseur,
- un modèle flottant (70) sous la forme d'un bateau ou d'un sous-marin ou sous la forme d'une soucoupe flottante (70') pour convertir l'énergie des vagues océaniques en énergie électrique contenant ses bases en béton (71) pour l'ancrage, et
- un modèle de propulsion (80) qui a trait aux navires de plaisance, de transport de marchandises et tout autre navire se déplaçant dans des eaux houleuses, utilisant aux fins de propulsion le convertisseur d'énergie houlomotrice proposé en combinaison avec un moteur électrique alimenté par batterie ou tout autre type de moteur.

12. Convertisseur d'énergie houlomotrice multifonction selon la revendication 11, dans lequel le convertisseur sous la forme d'une centrale électrique flottante est destiné à être ancré dans l'océan près ou loin de la côte sur sa base de béton (71), laquelle est installée sur le fond océanique, dans lequel la centrale électrique fonctionne à la surface de l'océan, en utilisant l'énergie avec les flotteurs montant et descendant sous l'effet des vagues et sous l'effet de l'oscillation de l'objet flottant, qui est sensiblement plus grand que les flotteurs, ce qui provoque des mouvements opposés, et/ou
dans lequel les convertisseurs sous la forme des centrales électriques flottantes incluent un réservoir (62) à cloisons longitudinales et transversales, dans lequel les cloisons longitudinales (79) sont fixes et de préférence étanches à l'eau, tandis que les cloisons transversales (69) sont réglables avec une ouverture et une fermeture automatiques par paliers pour contrôler les ondulations de l'eau (20) et le balancement de la centrale électrique.

13. Convertisseur d'énergie houlomotrice multifonction selon la revendication 11 ou 12, dans lequel les convertisseurs sous la forme de centrales électriques flottantes contiennent une pompe (61) qui sert à remplir et vider une certaine quantité de liquide océanique (20) dans le réservoir (62), pour augmenter l'effet de balancement différent de la centrale électrique et des flotteurs, et/ou
dans lequel les convertisseurs sous la forme de centrales électriques flottantes contiennent un treuil (73) doté d'un câble en acier inoxydable (72) qui sert à limiter l'amplitude de mouvement de la centrale électrique ancrée à la surface de l'océan, et à tirer la centrale électrique dans sa base (71), lors de l'activation de la pompe de remplissage de réservoir (62).

14. Convertisseur d'énergie houlomotrice multifonction selon l'une quelconque des revendications 11 à 13, dans lequel les convertisseurs de propulsion de navire contiennent des flotteurs aérodynamiques (3') qui glissent à la surface de l'eau et utilisent l'énergie houlomotrice lorsque le navire se déplace, et convertissent cette énergie en énergie de rotation pour la propulsion dudit navire, et/ou
dans lequel les convertisseurs de propulsion de navire comprennent des supports auxiliaires (32) et des supports verticaux (37) pour maintenir le flotteur aérodynamique (3') horizontalement lorsqu'il se déplace vers le haut et vers le bas par rapport au navire (80).

15. Convertisseur d'énergie houlomotrice multifonction selon l'une quelconque des revendications 1 à 14, dans lequel le convertisseur présente des mécanismes multiples pour maintenir une conversion stable d'énergie houlomotrice en énergie de rotation et pour protéger le convertisseur dans des conditions météorologiques difficiles et des courants d'eau extrêmes avec les protections suivantes :
- un premier mécanisme qui est activé par le contrôleur (8) en raison du nombre croissant de tours est l'alternateur (10), qui utilise l'énergie excédentaire produite pour charger et stocker l'énergie dans les batteries (45),
- une deuxième protection du convertisseur est le désaccouplement individuel des flotteurs au moyen de commutateurs à deux voies (16),
- une troisième protection est l'activation du frein électromagnétique ou mécanique (20),
- une quatrième protection est l'activation du commutateur à deux voies (16) pour bloquer avec la dent inférieure (56) dans l'engrenage (1) simultanément avec le moteur électrique à courant continu (54), qui avec le demi-engrenage (7) entraîne l'engrenage primaire (1) et soulève les flotteurs au-dessus de la surface de l'eau, et les deux possibilités suivantes qui ne s'appliquent qu'aux centrales électriques flottantes sont :
- la fermeture automatique des cloisons transversales (69) dans le réservoir (62) de la centrale électrique flottante au moyen du contrôleur électronique (8) en divisant le liquide (20) en plusieurs chambres plus petites, et de cette manière le liquide (20) cesse d'agir en tant que déstabilisant du corps de centrale électrique, et
- lorsqu'on est en présence de vagues extrêmes telles que lors d'un tsunamis, qui menacent d'endommager la centrale électrique, le convertisseur d'énergie houlomotrice multifonction utilise une pompe (61) pour remplir un réservoir (62) avec de l'eau de mer de telle sorte que la centrale électrique peut être immergée à l'aide d'un treuil (73) au niveau du fond marin jusqu'à sa base (71), et lorsque le danger est passé, la pompe (61) vide le réservoir de la centrale flottante et de cette façon renvoie la centrale électrique à la surface de l'eau pour qu'elle poursuive son fonctionnement normal.
